# EUROPEAN PATENT APPLICATION

(11) **EP 2 918 736 A1**
(43) Date of publication of application: **16.09.2015**
(21) Application number: 13853345.0
(22) Date of filing: 07.11.2013
(51) Int. Cl.: E03B 3/04

(54) **SYSTEM FOR USING WATER FROM RAINFALL FOR CREATING PERMANENT OR SEASONAL WATER SOURCES OR WATERING POINTS**

(30) Priority: 07.11.2012 ES 201231697
(71) Applicant: Candil Perez, Maria, 02450 Riopar (Albacete) (ES)
(72) Inventor: VALERO VALDELVIRA, Juan, E-02450 Riopar (Albacete) (ES)
(74) Representative: Balder IP Law, S.L.
(86) International application number: PCT/ES2013/070768
(87) International publication number: WO 2014/072559

(57) **Abstract**

The invention relates to a system for collecting, filtering, storing, dosing and recycling rain water, in order to provide emerging watering points or water sources of different volumes and seasonalities. To this end, there is a first impluvium cone (1) for collecting the rain water which then passes through a progressive grid system (5) that separates large impurities (branches and other), sending them to a surplus/waste channel (6) via a branching element (7). The volume of water passes through a siphon filter (8), to a receptacle (12) with labyrinths and sinuosities, to then access a modular vortex filter (16), and from there a receptacle/container (21), wherefrom the water creates sources or watering points (28), (46) and (35) for the supply of clean water for any use.

## Description

### Object of the Invention

The present invention refers to a system for use and treatment of water obtained from rainfall, intended to create with said waters, emerging watering points or water sources of different water flows and seasonal variations as a result of the regulation of a portion of these waters, obtaining them from a micro basin in which, under normal circumstances, the water circulates only a few days per year in either ephemeral or seasonal way.

The object of the present invention is the implantation of a system in a given area after analysing its climate parameters, soil profile and ecology of the location, which allows to regulate and collect a portion of the waters of said rainfalls in said area or determined location, and establish with it, several emerging watering points or water sources in four different ways:
A. A permanent emerging watering point with variable flow rate or magnitude and which operates with the incorporation of an artificial source, which recirculates the water through a thermal, mechanical and industrial tower which does not need an external motor, based energetic supply, but operates with a solar energy supply and with variable flow rate.
B. A seasonal water source with the addition of an artificial source that regulates the water so it flows during the months (from 2 to 5) which are considered adequate and with variable flow.
C. A seasonal water source operating by surplus, which flows when the first two water sources are duly filled, with a variable flow.
D. A seasonal water source fed by natural water source that flows temporarily at the end of the circuit with a variable volume flow.

The system achieves improving the conditions for human life and the vegetation around water, mitigating and reversing the erosion processes and the consequent desertification on the shores in the Mediterranean climate, characterised by the short, heavy and spaced rainfalls. The impact caused by the water drops when they hit the bare ground, initiates an erosion sequence, which will be reversed in all the areas where this system will be implemented, since it will act, by means of the autochthone vegetation which is reintroduced, as a natural regulator of the water provisions. The system may also be adapted, with the pertinent modifications, required by the characteristics of other systems or groups of living beings or biomes, such as prairies, steppes or even some deserts were some annual rainfall occurs.

### Background of the invention

Rainfalls in the Mediterranean climate and other biomes are characterized by episodes of rainfalls spaced in time and with certain intensity. This, together with a bare ground, with no vegetation, implies strong runoffs that erode and increase desertification due to loss of soil.

The present proposal intends to improve and optimise the use of the water for the recovery and maintenance of native flora, since otherwise the benefits of the use of these waters for this purpose, is substantially less.

The inventor does not know of any other system that could be mentioned as an antecedent for the present patent of invention, and which allows to use of a portion of rainfall waters to be processed, converted into decanted and filtered water, creating seasonal water sources/fountains together with other permanent cycle water sources, with the use of solar energy input, and thus regulating the surplus for a later temporary appearance or birth of natural water source.

### Description of the invention

The present system is described as based on a system for water collecting of a portion of runoff or runoff, surplus waters obtained from rainfall in the five existing modes (rainfall, drizzle, snow, hail, rainfall-snow), filtering and decanting the water, storing it, dispensing and recirculating the water, in order to have contributions of water sources, fountains, birth or natural water sources of different flows and seasonal operations in a micro-basin. A place or location will be selected which satisfies the conditions, preferably in a natural way, or alternatively the actions and interventions will be generated which are required in areas or locations for which the installation of the system is considered appropriate.

More specifically, the invention includes an impluvium cone which is settled or formed on the ground which surface intermittent or ephemeral surface runoffs occurred, which are generated when the rainfall water runs down the slopes of the impluvium cone itself. On the cone's surface, different layers of compacted clay are laid, upon convenience, which improves the fixing of the vegetable and plant layers, increasing the roughness of the surface and consequently the runoff of the sub-surface runoff. In this way, on the outlet of the impluvium cone, which corresponds to the lower apex of the cone, it is secured that a portion of the waters is directed to a system of progressive and decreasing intertwined grid with openings sizes from 250 mm to 12 mm, through which the solid materials carried by the runoff such as tree branches, stones, boulders, sands and gravels of a grain size higher than 12 mm are separated and deviated. Then the waters reach a branching element, free of solid materials and rocks or stones of a diameter higher than the size mentioned above.

To access to this branching element, a previous pipeline is installed, in which another set of progressive grids with decreasing openings sizes from 12 to 2 mm is created. This way the circulation or passing of sand and gravel to the following container is avoided, to said container only sand of a size of 2 mm or less and the suspended silt and clay in the water, will be accepted. The function of the branching element is to divide the volume flow rate with a flow regulator so that only a portion of waters is destined to be directed to the circuit of the system, so that the rest of the flow or water volume, flows through its natural course. The larger calliper remains, will follow the natural basin course. While the surplus waters with the sand and silt are diverted to a channel for the surplus/waste water.

The installation of some doors, in the base of the system, located sideways or lateral and/or cross-wise to the branching element, allow the cleaning and disposal of derived and accumulated gravels, upon convenience.

The water that flows through the branching element and is deviated to the system, for the use of rainfall waters, the water accesses the system through an horizontal siphon filter by decantation, built based on flat horizontal blades, being oriented by means of a change in the direction of the circulation of the water, making it flow in opposite direction to their inertial direction and forcing the water to go up an inclination of between 5 and 75% of the length and width of the container. This direction changes by mean of the blades located close to the inclined slope, making the heavier sand particles to decant to the bottom of the siphon filter, for their removal at will, by means of the opening of some plugs provided for said effect and installed in the lower levels of the same.

The capacity of this siphon receptacle will oscillate between 2 and 20 cubic meters, as a function of the size of the whole system.

The water after advancing through the horizontal siphon filter by decanting, leaves the filter at a lower level than that of the inlet, pouring by gravity into another receptacle that acts as a circulating deposit. Once in it, the water is forced to advance through a pipe located in the same, being driven and oriented in a coil and a labyrinth, in ladder steps, sometimes under counter-current, and with ramps and sinuosities. This attains that the vast majority of the mud or silt particles carried by the water, especially the larger diameter particles are carried by the runoff, are deposited at the bottom of the receptacle by the action of gravity, turbulence, and the differences in levels which retain and sediment. Inside this duct, organic elements are deposited, said elements can be, vegetable fibres that stick by friction and adhesion, to almost all the mud and a fair amount of clays carried by the runoff in this section of the flow. Biofilms, will form normally in said fibres, which will contribute to the cleanliness of the water.

In the bottom part of the receptacle, which we will denominate a circulating deposit, multiple outlets with plugs have been provided to facilitate the evacuation of the mud, silt, sand and clay into the surplus/waste water outlet channel that will be used to nourish and to fertilize the subsequent part of the system. This receptacle will be preferably open, without a cover, partially or completely in all its surface, or covered with doors that can be opened at will to facilitate the replacement of the fibres, as well as cleaning the receptacle. It will have a capacity of between 8 to 80 cubic meters, in relation to the size of the system.

The water comes out of the top of the receptacle, denominated, circulating deposit, accesses to a modular filter by decanting and centripetal action or centrifugation upon convenience, to which the water accesses through an inlet or funnel cone so that the water due to turbulence of the rotation effect and to the established level difference, operates and turns a propeller located below, at the end of the cone. Water under centripetal action or centrifuged by this action against the walls and against the bottom, facilitates more decanting and adherence of the clay of finer granulometry, as the walls will be fitted with blades and grids, of different neutral materials and are attached at different levels so that they facilitate the contact and the adherence thereof. At the same time this receptacle will also have different doors, plugs and openings with an airtight seal that will facilitate the emptying of the silt.

A significant portion of these impurities will be deposited at the bottom of the commented centripetal action centrifuge and decanting filter, can be evacuated, after opening a plug established under it, towards the surplus/ waste water channel.

This filter by decantation and centripetal action or centrifugation (depending on the variety of the clays to be decanted) is modular and will be composed by one or several modules conveniently linked with each other, in which the water accesses through the top and is evacuated below the action of the propeller, and it will have a capacity in each module, preferably between 1 and 5 cubic metres and a geometrical or irregular shape and its base will have an inclination between 5 and 75% from the starting point of the propeller to the surplus outlet, so that the silt will slip towards the established place. The last module of them, will have successive grid filters of the same or different size of openings, ranging from 200 to 800 Microns, according to the characteristic of the collecting zone. This will guarantee the passage of the water into the following recipient in terms of filtering and retention of particles of larger diameter than those of the filter. At the outlet, the water enters through the bottom, into a recipient/container in which between 1 and 50 cubic meters of charcoal or active carbon, have been loaded inside, depending on the volume of the system. The carbon is held by a grid, to guarantee a high degree of filtration. The water, after pushing the carbons vertically upwards and passing through it, generates the buoyancy effect of the vegetable carbon or activated carbon and allows pieces of carbon to adjust and fit between each other, as close as possible, to conform and optimise its filtering function. Both at the inlet or the outlet of this recipient/container, series of grids are placed, having progressive openings size and surface on a scale between 10 to 1 mm. at the inlet and 1 to 10 mm. at the outlet and between 200 and 1.000 square centimetres of filter surface, which will progressively reduce in size in order to retain the carbon pieces and allowing at the same time, the free circulation of the waters.

In the lower portion of this recipient/container one or more side doors, have been built with an airtight seal for the purpose of cleaning the inside of the same and change the activated carbon or vegetable carbon to convenience. The water comes out of the recipient/container through an outlet on the top portion of the recipient, to access a receptacle which we call collector recipient, preferably completely waterproof or partially according to what is adequate for the design. This waterproofing can be done with different methods and natural origin elements or artificial origin according to its structure and efficiency, as it may be, preferably, a compacted clay layer cover, rubber, cement, mortar, asphalt fabrics, either individually or combined. And inside the same, the following may be established; walls, enclosures, polymer deposits and stuffing of absorbent materials and/or, neutral permeable, for retention and release of the absorbed water by gravity in a rather slow process, depending on the filling state of the recipient/container.

These elements may be the same or different in size, nature and/or origin, in their natural state or elaborated, to optimise that they adapt to the orography of the location, with a minimum impact and at the same time, they are capable of housing inside of them, the cubic meters of water determined for the operation of a permanent water source and a seasonal water source established as follows and towards where the water flow is directed.

This entire complex on its top portion, will maintain a cover or lid, so that technically it achieves the closure and isolation of the contents. All this will prevent the evaporation of water and will avoid the procreation and establishment of Diptera and worms. On this technically isolated cover, the necessary elements will be anchored, which are elements that will allow the attachment of bales of straw or other vegetable fibres, which improve the thermal insulation of the water stored in this container.

The surplus water remaining in the deposit or the receptacle called collection receptacle, passes into another receptacle that may have the same, larger or lesser capacity than the previous one, which will be attached, piggy-back, crisscross or separated from the other, but of similar manufacturing conditions. Thus through this second deposit, the flow toward a second source will feed the volume of water to a second water source, in this case of a water source of seasonal character, releasing the surplus waters towards the third birth or natural water source, which will also be seasonal, with variable flow.

The water poured from these previous water sources will add their waters to an open container where it will perform the function of water layer or small seasonal pond. After completing this course, all surplus water will go to the surplus/waste water channel.

The surplus drainfall channel will derivate the sands, silt and surplus water towards two or more pre-established places so it complies with the fertilizing functions of silt and of hydrological regulation.

The permanent or perennial water source which is fed by the water flow from the above mentioned water collection receptacle, includes a duct/pipe for the water outlet, properly adjusted, emptying said water into four deposits, opened or closed to convenience, connected through the base by communicating vases.

A system will regulate the water flow coming from the pipe to the deposits, which will allow them to reach the minimum level required to realize the recirculation, this process consists in the elevation of water by evaporation and subsequent condensation. The inlet of the flow will be adequate for the aforementioned process, also maintaining a permanent flow of water from the source. Finally, the surplus water will circulate towards an outlet established for this purpose at the lowest level.

The first deposit of the four mentioned, is the place where the water flows when coming from the duct/pipe; This assembly is built in order to have the deposits and output pipes located in the shade, creating a fresh area by natural evaporation, so the *Adiantum* (maidenhairs), *Sonchusoleraceus* (cerrajas), *Prunus* and *Ficus carica,* etc. thrive and create conditions of a microclimate of a shady spot (umbria). The second deposit is larger, with a larger capacity and is located further away from the spout of the receptacle, and is specially designed as a drinking fountain for animals. That is why it has two compartments: one external and open that will maintain its level by a buoy which will close the valve and passage when it is full, and one closed container which will keep the water in its best condition. Alternatively a valve can be installed that will prevent the back pressure of the water feeding it back into the previous deposit. In both cases it prevents that contaminant agents return back from the animal water drinking fountain, into the system.

On the other hand, the third deposit is located following the previous ones, it is the one with the largest capacity and in its interior two or more buoys are installed which trigger some levers welded to geared shafts. Said shafts rotate a gear transmission, in accordance with the filling or emptying state of this third deposit, regulating the water flow volume in more or less volume, operating other elements that have to be regulated such as shades, check valves (with different uses and functions), water deposits for insects and essentially for opening or closing the doors of a solar curtain or heat source, which starts the operation process of an auto-reload tower, to which the water accesses through its base, coming from the third water deposit, through the corresponding pipe. The fourth deposit is part of the continuous loop of the auto-reload tower. It is inserted into the core of the tower, communicated through its base with the previous deposit, through a pipe of suitable diameter (between 10mm. and 70mm.) maintaining the optimal water level to start the evaporation process. All the deposits will have a removable filter at the inlet and another filter at the outlet to avoid possible plugging up of the system.

The auto-reloading tower, will have one or more doors, being said doors located in any point of the tower. They will be opened or closed depending on the position of buoys in the third deposit, and as a consequence of the action of the gear system which shall make the doors open or close. These locks can be operated according to the functions needed; they can be sliding doors, lateral, vertical or tangential.

Under filling conditions, the doors will be open, although they will gradually close according to the corresponding buoy, previously mentioned in the third deposit, as the buoy advances towards the empty position. The tower operates by raising the water through a column, making it to circulate, in a rapid evaporation process activated by a solar device, such as solar panels, implemented with copper plates and steel and concave and convex mirrors focused conveniently, concentrating the heat on the base of the tower and on the column.

Particularly, the system is established to create evaporation and this is achieved, by concentrating the heat on the elements mentioned above, conveniently oriented, and directing the heat to the base of the tower and the column, by attaching, refractory, and reflective materials internally and externally. All of this structured on the operating tower, according to the purpose and needs of the design. The required function consists in bringing the water to boil in the fourth deposit, included in the tower and making the water steam to go up into the upper receptacle. In order to obtain a regular or even boiling of the water, this deposit will contain balls different materials and diameters, preferably glass or metal balls. The temperature difference is maintained along the column with insulation, of different compositions, overlapping or combined, so that the water steam rises without interruption, driven by the temperature difference.

This tower base and column, consists of a cylinder, preferably made of steel or copper, with a wall of 5mm. to 20mm. thick and from 300 to 1.000 mm, diameter, which heats another tube of less diameter (from 100mm. to 400mm.) said tube is located inside, with a wall thickness between 5mm. to 10mm., while they are both connected by a salt deposit which reaches and maintains a constant temperature higher than 100°C once the process is started. Within the second tube, a fourth deposit is installed, preferably built out of steel, with a wall thickness, between 20mm. and 50mm., to which the water is supplied through its base, by means of a tube connected through communicating vases, with the previous deposit.

The inner side of the mentioned deposit of the column, will be at the same level that of buoys deposit, connected by the communicating vases system, the boiling of the water occurs inside and the corresponding evaporation of the same, inside a non-leak system.

The water steam rises through an insulated column that maintains the temperature and accesses to a closed upper receptacle. This upper receptacle, is located above the level of the water inlet to the receptacle called a collection receptacle. Said upper receptacle includes in the inside, a ventilation system that allows that a notable thermal change occurs, between the base of the tower, and the existent in the column and the steam that rises through said column and this final receptacle. This thermal difference is facilitated by an aeration system and by the incorporation of an impeller with external blades located on the top, which transmits the rotation through a shaft towards other internal blades of the same size or smaller.

The action of this rotation will produce turbulence, centripetal action and centrifugation of the water steam which by kinetics will project the particles against the walls, where the steam will turn into water again by the heat shock effect.

These condensed water drops run to the base of the closed receptacle and then from there, they return by gravity through two ducts or tubes installed for this purpose, to the fourth deposit.

In the water collection duct, where condensed water droplets from the closed top receptacle up to the deposit, one or more silica sand of variable granulometry particle filters and/or vegetable carbon or activated carbon with the purpose that the waters which are being recirculated are duly filtered by the sum of the evaporation action and the condensation, plus the ready filtered water and which passed through the referred sand or carbon filters.

The water returns to the header of the receptacle which feeds the permanent supply deposit of the water source, even though, a portion of this water can be deviated by means of a system of buoys, to the animals drinking fountain.

Finally it has to be said that the water coming from the above mentioned deposits or receptacles and which feeds the permanent water source and the seasonal water sources, plus a portion of the surplus/waste waters channel are poured onto a ravine under which, a filtration work has been made. This work consist in the use of channels and gullies pre-established on the ground or dig them, and waterproof them on their ground, by using a covering of compacted clays, to convenience. These trenches or channels will be re-filled with different materials, neutral and permeable, such as sand, gravel, and rock of different sizes.

The area and volume of this space will have a range, oscillating from four to one hundred times the surface and volume of all the previous complexes, with a variable depth between 2 and 20 meters with respect to the average level between the filtration ravine and the natural water source, which corresponds to the fourth seasonal water source of variable magnitude, of the system.

The final birth of a water source will result because of the emergence of these infiltrations, (siphon, capillarity, gravity) in a natural water source located at the lowest level of the designed system.

The described system allows the regulation and collection of a portion of rainfall water at a determined point, by means of industrial mechanical techniques, thereby establishing a permanent natural water source or a permanent water source which recirculates water with only solar energy support, and another natural water source birth, or a seasonal water source, adjustable in time and magnitude to convenience. A third birth, natural or seasonal water source arising from the surplus of the previous two, and finally a fourth birth natural water source in the form of natural water, seasonal and of variable magnitude, that arises after the infiltration of the ravine chosen for the creation of a small wetland or swamp in the lowest level of the system.

This is, by using the invention system, we are able to regulate and recirculate the water in the most suitable way, to fill the needs of each area, creating a microclimate in a very short period of time, increasing the value of the lots and the micro-region, replanting the chosen area and capturing significant amounts of CO₂ in forests and in the ground soil and obtaining clean water for animals and agricultural productions.

The general objective is to benefit humans, flora and fauna. Specifically with this system, a humid area throughout the year is created, starting from the replanting, recovering and/or creating areas of traditional irrigation and grasslands in arid lands, as well as creating an edible fruit producing forest which at the same time, increases the natural water regulation so impaired in the territory of Spain, and in the Mediterranean basin, caused by the de-forestation and, among other, due to forests and agricultural malpractices. The system may also be adapted, with the pertinent modifications, to the characteristics of other biomes such as prairies, steppes or even some deserts in which some annual rainfall occurs.

The purpose is that the system provides a number of benefits that result numerous and favourable, since the system will make micro-basins available in places where four different water contribution levels. They will be located in different levels and will have different dimensions and different magnitude and seasonality, depending on how the rainfall occurs and how would it be convenient to regulate them. All this, improves the conditions that will slow down or stop the desert, to develop life and economy, around the forest and the water sources and taking advantage of this agro-forestry production and water in favour of the entire eco-system.

Among other, the following possibilities can be emphasised:
- To obtain the maximization the flowing water during the year,
- Create multiple benefits for humans, flora and fauna,
- Possibilities of orienting the intervention of agriculture, forestry and cattle production,
- Creation of edible fruit producing forests.,
- Practice for the pupils of country schools and farm-schools,
- Small or micro-reservations for flora and fauna,
- Creation of small orchards of high and efficient production in ecological and traditional agriculture,
- Promotion of the sustainable real economy with immediate effects,
- Fight against climate change capturing CO₂ from plants, swamps or wetland, carbon farms, etc.
- Control and reduction of erosion,
- More subsurface infiltration and the following water regulation as there will be more plants, with a better usage of resources.

### Description of the Drawings

In order to complement the description that will follow, and in order to help in getting a better understanding of the features of the present invention, in accordance with a preferred example of a practical embodiment of the same, enclosed you will find as an integral part of the description, a set of drawings and figures with illustrative nature and not restrictive in any way, the following is submitted:
Figure 1 shows a general representation and schematics of the invention.
Figure 2 shows an enlarged detail of the filter system called "progressive grids" for the deriving of impurities such as branches and other materials.
Figure 3 shows an enlarged detail of the element which forms the siphon filter.
Figure 4 shows also an enlarged detail of the circulating coil and labyrinth receptacle.
Figure 5 shows a detail of the decanter filter by centrifugation and centripetal action.
Figure 6 shows a detail of the recipient/container with the vegetable carbon filter inside, which participates the same in the system of the present invention.
Figure 7 shows a hand drawn detail of the auto-recharge tower with the water evaporation column and said water recovery system.

### Preferred embodiment of the invention

As it can be seen, in the above mentioned figures, the invention system comprises in the first place an impluvium cone (1) which is installed on the ground, which is aimed at collecting the rainfall or rainfall water (2), which waters generates a surface run-off o runoff (3) on the sides or slopes of the impluvium cone (1), which may be intermittent or ephemeral.

In any case, lower apex (4) of the impluvium cone (1) defines an outlet that flows into a filtering system called progressive grid for the derivation of impurities and other materials to a branching element (7) where the distribution takes place, picking up a portion of the course or river bed and displacing the remains of objects or debris, carried by the runoff and water to a channel of surplus/waste water (6).

The water from the branching element (7) advances into a horizontal siphon filter (8) based on internal horizontal metal blades (9), passing through them counter-current respect to the inertial direction, going up a slope between 5 and 75%, and of course, with the changes of direction provided by those horizontal metal blades (9).

In the bottom of the siphon filter (8) the heavier particles, which are the same as those which are removed and sent to the surplus/waste water channel (6) after the opening of the corresponding plug (10) installed in said siphon filter (8).

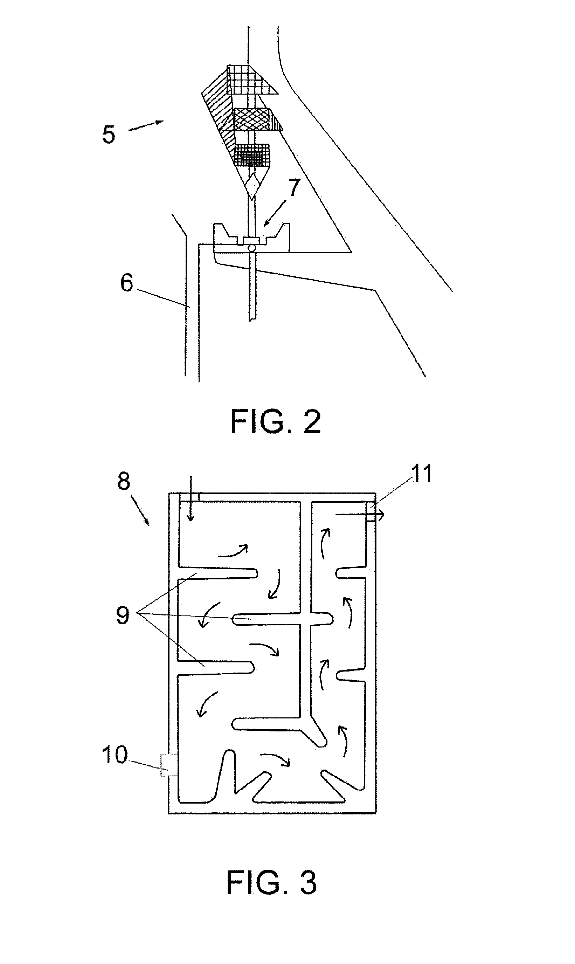

The outlet (11), as shown in Figure 3, is provided at the top of the siphon filter (8), from which the water flows towards a receptacle (12) in which a tube oriented in a coil and labyrinth, stair steps, ramps and sinuosities, in which components of organic origin have been deposited, such as fibres (13).

In this receptacle (12) the inlet (14) is located at the top, and the outlet (15) is located on the opposite side, also in the upper part, after the passage of the water through the labyrinth formed by various elements including the inside the receptacle (12).

Based on the components of organic origin (13), the vast majority of the particles of the soil that still carry water, are deposited in the bottom due to the action of gravity, the retained particles and the differences in the level, being retained in the vegetable fibres or components of organic origin (13) due to friction, and retention and sedimentation in the coil and the labyrinth. In said fibres, normally biofilms will be formed, which will contribute to the cleanliness of the water.

From this receptacle (12), the water passes to a modular centripetal action, decanting and centrifugation modular filter (16), acting as a vortex through the action of the water turbulence, accessing through a funnel or Cone (17), and the water falling onto a propeller (18) located under said outlet of the funnel (17), by activating on its way, the above-mentioned propeller (18) producing the centripetal action or centrifugation of the water against the walls and the bottom of the receptacle, facilitating more decanting and adherence on appropriate films and grids by friction of the sheets which are housed inside.

The outlet of this vortex and decanting by centripetal action and centrifugation filter (16), referenced with the number (19), is located in a level slightly below the inlet level, this is, on the inlet cone or funnel (17) is established.

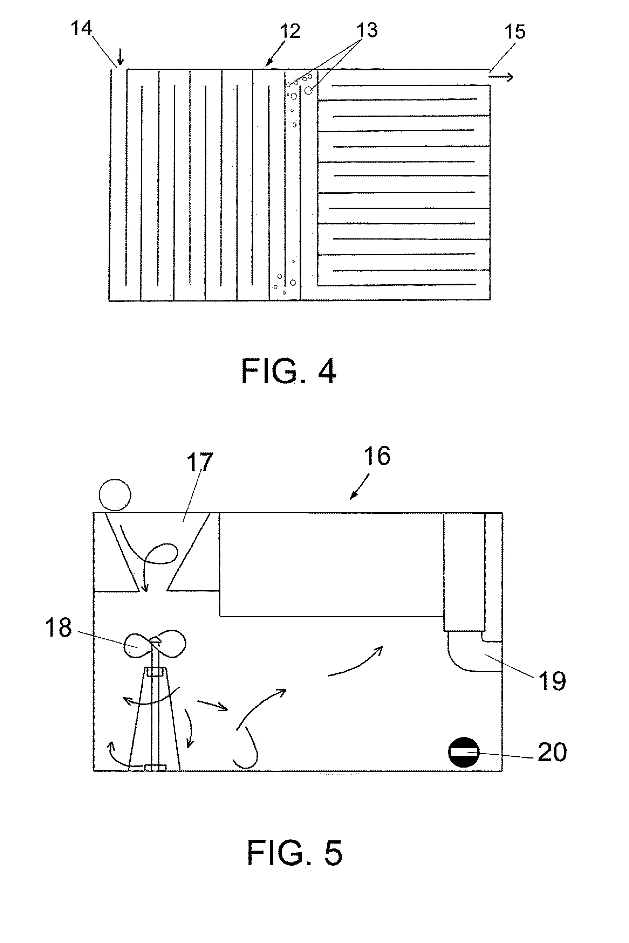

In this way the back-water pool formed because of the design of the apex and decanting by centripetal action or centrifuged filter (16), will deposit the smaller particles on the bottom floor or walls, the bottom floor will have an inclination of between 5 and 75%, facilitating the cleaning of the mud or silt smaller size particles through a side outlet with a plug (20) located to this effect, as shown in Figure 5.

As it has already been mentioned, the filter (16) is modular and may present different geometric shapes and designs so that it can be implemented to will or convenience, being able to use a single module or several modules, linking them in the way deemed most appropriate and reserving the latter to filter particles between 200 to 800 Microns in size, as convenient. Allowing the system to adapt it-self to the characteristics of the waters of the location and the characteristics of the terrain, with minimal impact on it, It can also be positioned in parallel, in a line or overlapping, provided that the water flow is produced by gravity from one module to the other.

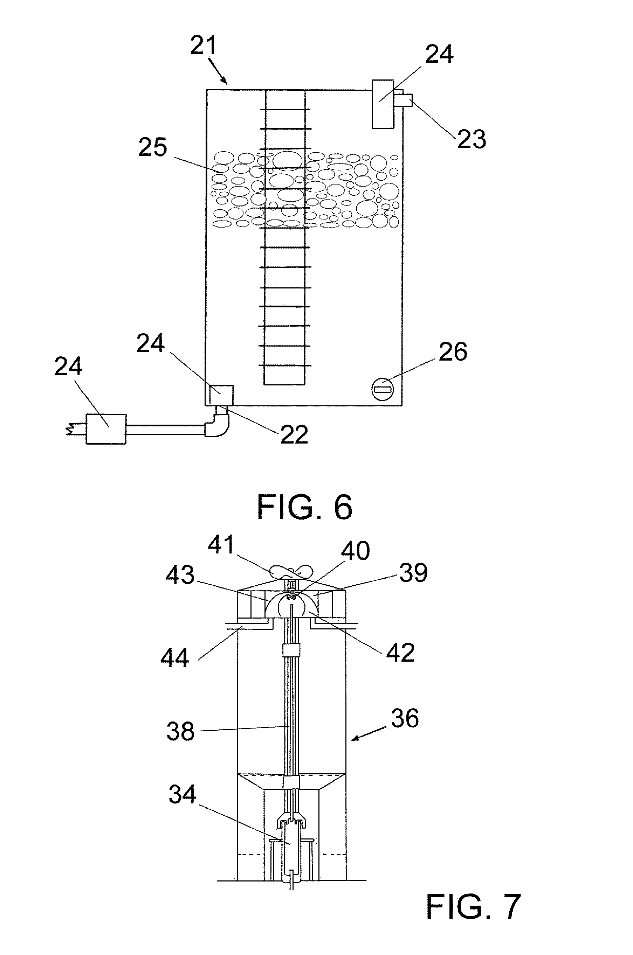

From that vortex and decanting by centripetal action and centrifuge filter (16), the water accesses to a recipient/container (21), which admits the water across the bottom (22), as shown in Figure 6, while the outlet (23) is established above it.

In the inlet duct of the commented recipient/ container (21), as well as the inlet and the outlet, corresponding grids (24) have been provided with large to small openings, with the particularity that in the interior of the recipient/container (21) a mass of vegetable carbon and/or activated carbon (25) which guarantees a high degree of filtration after the water pushes the carbon vertically and passes through it, so that the buoyancy effect of the carbon, allows the pieces of the same to adjust themselves in order to conform and maximize the filter action from the base.

At the bottom and at the top, one or more doors (26) have been installed with airtight seals that help in cleaning the recipient/container (21) and replace the mass of carbon (25) to convenience. Also supported in the structure, an internal ladder and another steel ladder, installed outdoors tied to the structure to facilitate the work of verifying and maintaining of the system.

From said recipient/container (21), the water through the outlet (23), accesses a recollection receptacle (27), which is totally or partially waterproofed, the base, for example, is covered with compacted clay, rubber, mortar, asphalt fabrics, etc., individually or combined, so that the inside of said recollection receptacle (27) will have walls, enclosures and deposits of polymers and filled with neutral absorbent materials that retain and release the water absorbed by gravity in a slow process.

From such recollection receptacle (27) a birth or permanent water source (28) is fed, which first comprises a deposit (29) with an outlet pipe (30), which feeds four successive deposits (31, 32, 33 and 33b), which can be closed or open according to the needs and are connected through their base, with a communicating vases system, so the water maintains the same level but only flows towards the outlet through the lowest level.

The deposit (31) is the place where the water jumps up and helps to create a cool area by natural evaporation, while deposit (32) is a receptacle of a larger capacity and with the same purpose, more oriented to animals, due to this fact, it is located more distant from the outlet pipe (30), and regulated by two compartments: one external and open compartment and one closed compartment which will produce water, keeping it under the best conditions.

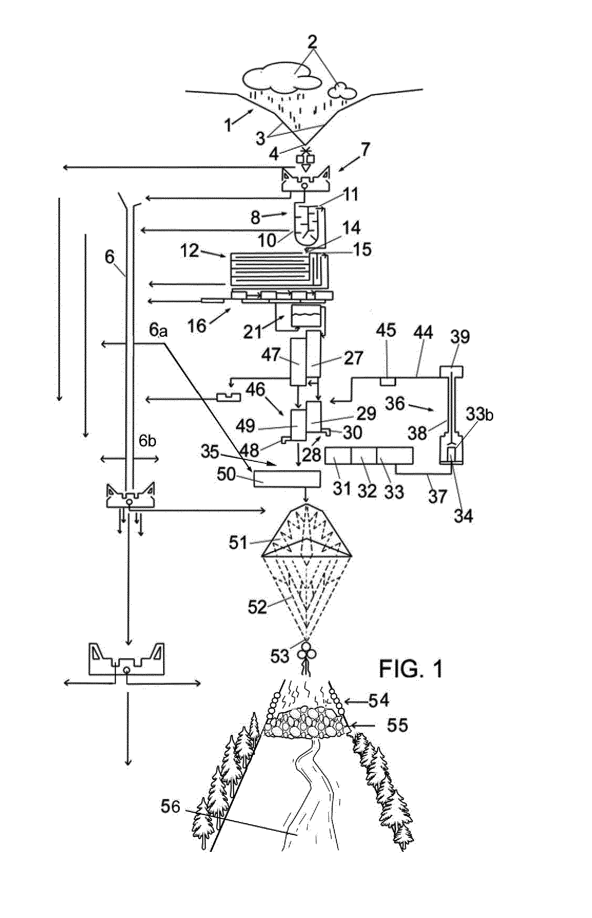

Furthermore, the deposit (33) has a large capacity and inside it includes two or more buoys, as convenient and attached to two levers that allow the operation of the gear shafts which rotate a gear system in a transmission. Another deposit (33) is fed from another smaller (33b) deposit installed inside the auto-reloading tower (36). This system manages to carry out the opening or closing of the flow volume that comes out of the outlet pipe and an operation of opening or closing of the doors of a heat source (34) which is installed in the auto-reloading tower (36), which re-circulates the water to the deposit (29), so that the water accesses this tower through its base to the smaller reservoir (33b) through pipe (37)as shown in Figure 1.

Said auto-reloading tower (34) will have one or more doors that can be of the side slide type doors, vertical or tangential, which will be closed if there is no water in the circuit, and that will open mechanically, gradually and automatically when the buoy of the deposit (33) is in the filling position, elevating the water and making it to circulate, in a rapid evaporation process, operated by solar plates and the added support of concave and convex mirrors plus the timely reflective materials.

This water circulates, after starting to boil in the deposit located in the core of the base of the auto-reloading tower (36), in the form of steam through a vertical column (38), in a rapid evaporation process, so that the water steam that is produced, enters a closed deposit (39) in which there is an internal small rotor or impeller (40) located on the top of the tower, which is operated by external winds that rotate another rotor (41). The action of this internal rotor, is centripetal or centrifuges the water steam towards the walls (43) of the deposit (39), where it will condense into liquid water through thermal shock, due to the admission of colder air on the external walls and the circulation of the air produced by the internal rotor or impeller (40).

The condensed water drop, to the bottom (42) and from there, they return, by gravity, through ducts (44), to the corresponding deposit (29) which stores and regulates the water destined to the above mentioned permanent water source.

In these ducts (44) one or several silica sand of variable particle size and activated carbon filter (45) have been installed, so the waters are properly filtered by the sum of the action of evaporation and condensation, plus passing through said sand silica and activated carbon filter (45).

On the other hand, a second birth or natural water source, has been provided in this seasonal case (46), which comprises a deposit (49) to which the water enters into the deposit (47), said deposit (47) has an outlet with one outlet for the evacuation by surplus, into the channel for surplus/waste water (6).

From this deposit (47) the water passes into the deposit which forms the so-called birth or natural seasonal water source (46), which deposit (49) has a spout pipe (48) from which the water accesses the deposit (50) with a pipe which carries water to a receptacle, so this water can be used for agricultural use or for water for animal drinking.

The surplus waters from the collection receptacle (27) and the deposit (47), will form a third birth seasonal water source (35), while the water that flows well regulated through those two water sources (28-46), plus both surplus and a portion of the waters from the surplus/waste water channel (6), which has two or more outlets (6a and 6b) is poured into an infiltration ravine (51) under which some previous work of waterproofing the ditches in the ground was made and were filled with different neutral and permeable materials, such as sand and crushed stones of different size according to the reference (52), so that the area of this space will oscillate between four and one hundred times the surface and volume of all the previous complex, with a variable depth between 2 and 20 mts. with respect to the average level between the filtration ravine (51) and the birth or natural water source.

At the end of those infiltrations a final birth or resurgence, called "water eye", with an outlet (53) located in the lower level of the complete system, from which water will flow through a mixed system, preferably made of siphon, capillarity or gravity.

After said resurgence, wetland (54) retained by a fence (55) crescent moon shaped, formed by stones of variable size and a height of between 30 and 90 centimetres, which makes the water to converge into an outlet in the form of seasonal creek (56) which will advance toward the nearest natural course.

## Claims

1. A system for the use of rainfall water to create birth water sources of permanent or seasonal water sources provided for the collection of a portion of runoffs coming from rainfall water such as (rainfall, drizzle, snow, sleet and hail), to create water births or water sources of different flows or volumes and seasonal characteristics in a micro-basin and provide water for any use, all this, prior to the selection of the location or spot, that brings together natural conditions and/or to allow an easy adaptation of the chosen ground for the implementation of the suitable system, **CHARACTERIZED in that** it includes an impluvium cone (1) for recollection of rainfall water (2) established on the suitable ground on which intermittent or ephemeral surface runoffs (3) occur, including said impluvium cone (1) on its apex (4) it has an outlet, from which the waters have access to a system which considers a progressive grid which is determinant of a filter (5) in which different materials pass through it, and are dragged towards a branching element (7) through which, part of these impurities or dragged materials, are derived to an surplus/waste water channel (6), while the water with small size impurities, of a calliper preferably less than 12 mm, they reach a siphon filter (8) installed after the branching element (7) being said siphon filter (8) fitted internally with a plurality of flat and horizontal blades (9), with direction changes, so that the heaviest particles are decanted to the bottom, for their voluntary removal and being directed towards the surplus/waste water channel (6) including said siphon filter (8) a top outlet (11) located at a lower level than that of the inlet, through which outlet (11) the water pours in the receptacle (12) in which a coil and a labyrinth determining stair ramps and sinuosities, precipitating most part of the silt and clay particles to the bottom of the receptacle (12), where said particles adhere to organic origin components (13), such as vegetable fibres, incorporated upon passing into the labyrinth step formed in the receptacle (12);having placed in the top part of said receptacle (12) an outlet (15) through which the water accesses a modular vortex filter (16), in which the water is subject to centripetal and centrifugal action, said modular vortex filter (16) includes an inlet in the form of cone or funnel (17) which produces turbulence and subjects the water to centripetal action, for the rotation of a propeller (18) located inside said vortex modular filter (16), precipitating the impurities to the bottom, while the water, through convenient outlet (19) of said modular vortex filter (16), reaches a recipient/container (21) containing vegetable carbon or activated carbon (25) deposited inside of it, for the filtering of water, where such recipient/container (21) includes a top outlet (23) through which the water reaches a collecting receptacle (27) from which and by surplus a first birth or permanent water source (28) is created and a second birth or seasonal water source (46), as well as a third birth or seasonal water source (35); with the particularity that from the first birth or permanent water source (28) the water is supplied to a succession of deposits (31, 32, 33 and 33b), communicated through their base, including the last container or deposit (33), of a larger capacity than that of the previous ones, a buoy which drives a shaft that acts on a auto-reloading tower (34), to which the water enters through a pipe (37), through the bottom, being said water propelled through a vertical column (38) until it reaches a deposit on the top (39) tightly closed, in said vertical column (38) the water is vaporized by the contribution of heat of a solar system based on oriented mirrors and appropriate reflecting materials, with the particularity that **in that** said top deposit (39) the condensation of the water steam occurs, where said water is recycled in deposit (29) corresponding to the birth or natural water source or the permanent water source (28).

2. The system for the use of rainfall water to create natural or birth water sources or permanent or seasonal water sources according to claim 1, **CHARACTERIZED in that** on the surface of the impluvium cone (1) layers of compacted clay are laid in order to improve the adherence of the vegetable strata, increasing the surface ruggedness and with this, the flow of the surface runoff.

3. The system for the use of rainfall water to create natural or birth water sources or permanent or seasonal water sources according to the previous claims, **CHARACTERIZED in that** the vortex modular filter (12) includes one or several modules connected between them, with a capacity of each one of 1m³ to 5m³ and an irregular or regular geometric shape, with an inclination of its bottom between 5% and 75%, the last module incorporates successive filtering grids with the same or different openings, between 200 and 800 microns according to the characteristics of the collection zone, in order to guarantee the passage of the water to the following receptacle or module.

4. The system for the use of rainfall water to create natural or birth water sources or permanent or seasonal water sources according to the previous claims, **CHARACTERIZED in that** the recipient/container (21) incorporates a deposit for vegetable carbon or activated carbon (25) for filtering, including said recipient/container (21) a lower inlet (22) and a top outlet (23), both equipped with the corresponding grids (24) for the corresponding filtering action.

5. The system for the use of rainfall water to create natural or birth water sources or permanent or seasonal water sources according to the previous claims, **CHARACTERIZED in that** the first birth, natural or permanent water source (28) includes a deposit (29) receiver of the water coming from the collecting deposit (27) showing said deposit (29) an outlet pipe (30) to feed the succession of deposits (31, 32, 33, etc.) while the second natural or birth seasonal water source (46) includes a deposit (49) with an outlet valve (48) towards a common deposit (50) for the water collection for its use, having provided that the surplus water of the receptacles (27 and 47) form a third natural birth or seasonal water source (35).

6. The system for the use of rainfall water to create natural or birth water sources or permanent or seasonal water sources according to the previous claims, **CHARACTERIZED in that** the waters corresponding to natural, births or permanent water sources (28) and seasonal water sources (46), as well as the surplus/waste waters (6), are directed through a channel towards the back water pools of an infiltration ravine (51), under which previous work of waterproofing ditches and filling them with different materials (52), the corresponding area leads to an outlet or exit (53) corresponding to a water source located in the lowest level of the entire system.

7. The system for the use of rainfall water to create natural or birth water sources or permanent or seasonal water sources according to the previous claims, **CHARACTERIZED in that** both the branching element (7), as siphon filter (8), the receptacle (12) the vortex filter (16) by decanting and centrifuge and the receptacle (47) of the second birth or natural water source (46) have the corresponding outputs installed for the disposal of surplus water and impurities into the surplus and waste water channel (6), and in this case clays, limes and sand.

8. The system for the use of rainfall water to create natural or birth water sources or permanent or seasonal water sources according to the previous claims, **CHARACTERIZED in that** the receptacle (12) includes openings or top covers in order to allow the substitution and replacement the organic origin components (13).

9. The system for the use of rainfall water to create natural or birth water sources or permanent or seasonal water sources according to the previous claims, **CHARACTERIZED in that** the vortex filter (16) has a cone or funnel (17) for the inlet of the water under which a propeller (18) has been provided, which is driven by the turbulence originated in said water inlet through the funnel (17) producing centripetal force in the water and the decanting of the impurities on the bottom, said vortex filter (16) with an outlet (19) located on the lowest level, below the corresponding inlet of the cone of the funnel (17).

10. The system for the use of rainfall water to create natural or birth water sources or permanent or seasonal water sources according to the previous claims, **CHARACTERIZED in that** the deposit (39) established on the top section for the condensation of the water fed through the vertical column (38) includes an internal fan (40) likely to be powered by another external fan (41), for the centripetal action of the water on the walls (43) and the corresponding decanting of small impurities on the bottom or base (42), considering an outlet (44) for the return of the condensed water towards the deposit (29) corresponding to the first birth or natural water source (28), including the outlet (44) and a silica filter (45).
